# EUROPEAN PATENT SPECIFICATION

(11) **EP 3 144 910 B1**
(45) Date of publication and mention of the grant of the patent: **24.07.2019**
(21) Application number: 16184993.0
(22) Date of filing: 19.08.2016
(51) Int. Cl.: G08B 21/02, H04W 4/00

(54) **METHOD AND DEVICE FOR LOCATING A WEARABLE DEVICE**
VERFAHREN UND VORRICHTUNG ZUR LOKALISIERUNG EINER TRAGBAREN VORRICHTUNG
PROCÉDÉ ET DISPOSITIF DE LOCALISATION D'UN DISPOSITIF VESTIMENTAIRE

(30) Priority: 16.09.2015 CN 201510589706
(43) Date of publication of application: 22.03.2017
(73) Proprietor: Xiaomi Inc., Beijing 100085 (CN)
(72) Inventor: LIANG, Xin, Haidian District, Beijing 100085 (CN); TAN, Kangxi, Haidian District, Beijing 100085 (CN); RU, Yi, Haidian District, Beijing 100085 (CN); HE, Li, Haidian District, Beijing 100085 (CN)
(74) Representative: Sadler, Peter Frederick

(56) References cited:
- EP-A1- 1 630 757
- EP-A1- 1 699 183
- EP-A1- 2 053 573
- WO-A1-2014/042507
- WO-A1-2016/080986

## Description

### TECHNICAL FIELD

The present disclosure generally relates to computer technologies, and more particularly, to a method and devices for locating a wearable device.

### BACKGROUND

With the proliferation of smart terminal devices, derivative products of smart terminal devices are also widely applied. For example, wristbands may have a loss-prevention function. A wristband worn by a child may be connected with a terminal device of a parent of this child via wireless communications such as Bluetooth. When the child with the wristband is separated from the parent by a long distance, the Bluetooth connection is disconnected, and the terminal device of the parent will output alarms. However, such a wristband does not help the parent to quickly find the child in crowded locations.

International patent publication WO 2014/042507 describes a system for wireless tracking for locating lost items. When an identifier device's RF link is disconnected from an observing device the identifier deice enters into a broadcasting mode and the observing device attempts to alert the user with alter ringtones, sounds etc. The user may then activate a function whereby the observing device sends a node ID to a node server to register the lost identifier device. Participating observing devices, having the necessary APP installed, then pull relevant lost node data from the server and scan for the broadcasting identifier device to retrieve the lost device's ID and determine geographical coordinates of the observing device for reporting to the server.

International patent publication WO 2016/080986 A1 describes a method and system for tracking a mobile device.

### SUMMARY

The present disclosure provides a method and a device for locating a wearable device in order to solve the problem that if a child with a wristband gets separated from his/her parent and Bluetooth connection is disconnected, the wristband is not helpful for quickly finding the child at crowded positions

The invention is defined in appended claims 1 to 13.

The technical solutions provided by embodiments of the present disclosure have the following advantageous effects:

After a wearable device is disconnected from a first terminal device, the wearable device broadcasts a notification message. After a short range communication connection between the wearable device and surrounding second terminal devices are established, the second terminals report the identity of the connected wearable device to a server, and the server locates the location of the wearable device according to the second terminals to determine the location information of the wearable device. Thus, it is guaranteed that after the first terminal device is disconnected from the wearable device, the location of the wearable device can be quickly determined.

In the present disclosure, the wearable device may notify surrounding second terminal devices of the identity information of the wearable device and distress information, and the second terminal devices report the identity information of the wearable device and the location information of the second terminal devices to the server, so that the server can quickly locate the wearable device according to multiple pieces of location information.

In the present disclosure, before the wearable device is disconnected from the first terminal device, the wearable device may obtain identity information of a user who uses the wearable device so that the wearable device can send the distress information to surrounding second devices when the connection is disconnected.

In the present disclosure, when the wearable device seeks help after the connection is disconnected, the wearable device can send broadcast information via any manner such as Bluetooth, wireless networks, or base stations to extend the application scenario without limiting to a single help seeking manner. Thus, the server can locate the wearable device more quickly and accurately.

In the present disclosure, it is preferable that the wearable device is connected with the terminal device via Bluetooth so as to reduce costs.

In the present disclosure, when second terminal devices receive the notification message sent from a nearby wearable device, the second terminal devices establish a connection with the wearable device, and report the connection with the wearable device, so that the server can locate the wearable device according to these second terminal devices and thereby determine the location of the wearable device.

In the present disclosure, the second terminal devices obtain the identity information of the wearable device and send the identity information and the location information of the second terminal devices to the server, so that the server can quickly locate the wearable device according to multiple pieces of location information.

In the present disclosure, the second terminal devices receive instructions from the server to turn on short range communication detection. The server controls the second terminal devices surrounding the first terminal device to help the server to find the wearable device and thereby to locate the wearable device.

In the present disclosure, it is preferable that the wearable device is connected with the terminal device via Bluetooth so as to reduce costs.

In the present disclosure, the first terminal device reports the location information of itself and distress information to notify the server that the first terminal device is disconnected from the wearable device. The server sends a request for turning on monitoring to second terminal devices within a preset range of the first terminal device according to the location information. Thus, the server controls the surrounding terminal devices to find the wearable device, and thereby can locate the wearable device quickly and efficiently.

In the present disclosure, the second terminal devices report the location information of themselves, and thus the server can determine the location of the wearable device more accurately and quickly according to the location information of the multiple second terminal devices.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a first embodiment of a method for locating a wearable device according to an exemplary embodiment.
Fig. 2 is a flowchart showing a second embodiment of a method for locating a wearable device according to an exemplary embodiment.
Fig. 3 is a flowchart showing a third embodiment of a method for locating a wearable device according to an exemplary embodiment.
Fig. 4 is a flowchart showing a fourth embodiment of a method for locating a wearable device according to an exemplary embodiment.
Fig. 5 is a flowchart showing a fifth embodiment of a method for locating a wearable device according to an exemplary embodiment.
Fig. 6 is a flowchart showing an interaction example of a method for locating a wearable device according to an exemplary embodiment.
Fig. 7 is a block diagram showing a first embodiment of a wearable device according to an exemplary embodiment.
Fig. 8 is a block diagram showing a second embodiment of a wearable device according to an exemplary embodiment.
Fig. 9 is a block diagram showing a third embodiment of a wearable device according to an exemplary embodiment.
Fig. 10 is a block diagram showing a fourth embodiment of a wearable device according to an exemplary embodiment.
Fig. 11 is a block diagram showing a first embodiment of a terminal device according to an exemplary embodiment.
Fig. 12 is a block diagram showing a second embodiment of a terminal device according to an exemplary embodiment.
Fig. 13 is a block diagram showing a third embodiment of a terminal device according to an exemplary embodiment.
Fig. 14 is a block diagram showing a first embodiment of a server according to an exemplary embodiment.
Fig. 15 is a block diagram showing a second embodiment of a server according to an exemplary embodiment.
Fig. 16 is a block diagram showing a physical body of a wearable device according to an exemplary embodiment.
Fig. 17 is a block diagram showing a physical body of a terminal device according to an exemplary embodiment.
Fig. 18 is a block diagram showing a physical body of a server according to an exemplary embodiment.
Fig. 19 is a schematic diagram showing a system for locating a wearable device according to an exemplary embodiment.
Fig. 20 is a block diagram showing a wearable device 600 according to an exemplary embodiment.
Fig. 21 is a block diagram showing a terminal device 1200 according to an exemplary embodiment.
Fig. 22 is a block diagram showing a server 1900 according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

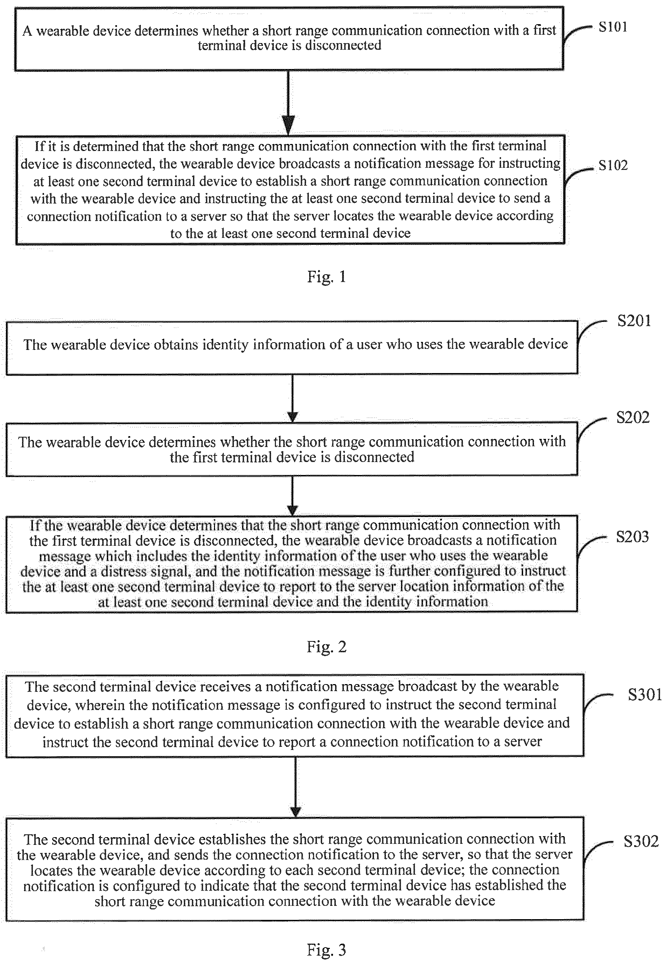

Fig. 1 is a flowchart showing a first embodiment of a method for locating a wearable device according to an exemplary embodiment of the present disclosure. As shown in Fig. 1, the method for locating a wearable device is mainly applied at a wearable device side. The wearable device may be smart devices capable of being directly worn such as wristbands or watches. After a first terminal device is disconnected from the wearable device, the wearable device can be quickly located by other surrounding terminal devices. Specifically, the method for locating a wearable device include the following steps:

In step S101, the wearable device determines whether a short range communication connection with a first terminal device is disconnected.

In the step, the wearable device itself has a detection function, and the disconnection from the previously connected first terminal device can be detected. That is, bidirectional detection function is started when the wearable device is connected with the first terminal device. The short range communication connection refers to a wireless communication approach which is available only within a certain distance range. For example, Bluetooth connection, Near Field Communication (NFC) and the like.

In step S102, if the wearable device determines that the short range communication connection with the first terminal device is disconnected, the wearable device broadcasts a notification message for instructing at least one second terminal device to establish a short range communication connection with the wearable device and instructing the at least one second terminal device to send a connection notification to a server so that the server locates the wearable device according to the at least one second terminal device.

In the embodiment of the present disclosure, after the wearable device is disconnected from the previously connected first terminal device, i.e., the wearable device detects the disconnection information, the wearable device broadcasts a notification message using Bluetooth, or other radio information such as wireless local area networks, or base station signals. The notification message is configured to notify second terminal devices within a certain range from the wearable device that the wearable device is disconnected from the previously connected terminal device, and request to establish a short range communication connection with the second terminal devices. The notification message is further configured to instruct the second terminal devices to notify the server after establishing a connection with the wearable device, so that the server can obtain the locations of the second terminal devices to quickly locate the wearable device.

In specific implementation, optionally, the notification message includes identity information of a user who uses the wearable device and also optionally a distress signal, and the notification message is further configured to instruct the at least one second terminal device to report to the server location information of the at least one second terminal device and the identity information. If the notification message broadcast by the wearable device includes the identity information of the wearable device itself and distress information, the second terminal devices can obtain information regarding the locations where the second terminal devices are by performing location process via a Global Positioning System (GPS), and report the identity information of the wearable device and the information regarding the locations where the second terminal devices are to the server, so that the server can locate the missing wearable device according to the location information of the second terminal devices which establish a short range communication connection with the wearable device corresponding to the identity information. Then, the server can obtain the location information of the wearable device to quickly find the wearable device.

In the method for locating a wearable device provided by the embodiment, after a wearable device is disconnected from a first terminal device, the wearable device broadcasts a notification message. After a short range communication connection between the wearable device and surrounding second terminal devices are established, the second terminals reports the identity of the connected wearable device to a server, and the server locates the location of the wearable device according to the second terminals to determine the location information of the wearable device. Thus, it is guaranteed that after the first terminal device is disconnected from the wearable device, the location of the wearable device can be quickly determined. Consequently, the speed and accuracy for locating the wearable device are improved.

Fig. 2 is a flowchart showing a second embodiment of a method for locating a wearable device according to an exemplary embodiment. As shown in Fig. 2, on the basis of the embodiment as shown in Fig. 1, the method for locating a wearable device according to another exemplary embodiment includes the following steps.

In step S201, the wearable device obtains identity information of a user who uses the wearable device.

In the step, after establishing a connection with a first terminal device, the wearable device needs to obtain identity of the user who uses the wearable device, for example, the name, the guardian, contact numbers, home address, and the like. The obtaining of the information at least includes the following two approaches:

In a first approach, the wearable device receives the identity information sent from the first terminal device, and locally stores the identity information. For example, a user can input related identity information by the first terminal device and send the identity information to the wearable device for storage.

In a second approach, the wearable device collects the identity information recorded by a user, and locally stores the identity information. The wearable device itself has an input device such as a touch screen, a microphone or a display and the like, and thus related identity information can be recorded by the wearable device itself.

In step S202, the wearable device determines whether the short range communication connection with the first terminal device is disconnected.

In step S203, if the wearable device determines that the short range communication connection with the first terminal device is disconnected, the wearable device broadcasts a notification message which includes the identity information of the user who uses the wearable device and a distress signal. The notification message is further configured to instruct the at least one second terminal device to report to the server location information of the at least one second terminal device and the identity information.

In embodiments of the present disclosure, after the wearable device determines that the short range communication connection between the wearable device and the first terminal device is disconnected, the wearable device broadcasts the notification message to surrounding devices. Specific implementation methods include at least the follows.

The wearable device broadcasts the notification message via Bluetooth; or the wearable device broadcasts the notification message via a wireless local area network; or the wearable device broadcasts the notification message via a base station signal.

If the surrounding second terminal devices agree with joining this function, the second terminal devices can turn on the short range communication connection in a certain time internal. After receiving the notification message, if the second terminal devices agree with the connection, the second terminal devices establish a connection with the wearable device, and then notify the server of the location information and the identity information so that the server can locate the wearable device.

In the above two embodiments, one solution is that the short range communication connection includes but not limited to Bluetooth connection, and then the wearable device can establish a Bluetooth connection with the first terminal device. After the wearable device founds that the Bluetooth connection is disconnected, the wearable device can establish a Bluetooth connection with surrounding second terminal devices and transmits related information.

In the method for locating a wearable device provided by the embodiment, before the wearable device is disconnected from the first terminal device, the wearable device needs to obtain identity information of a user who uses the wearable device so that the wearable device can send the distress information to surrounding second devices when the connection is disconnected. When the wearable device seeks help after the connection is disconnected, the wearable device can send broadcast information via any manner such as Bluetooth, wireless networks, or base stations to extend the application scenario without limiting to a single help seeking manner. Thus, the server can locate the wearable device more quickly and accurately. It is preferable that the wearable device is connected with the terminal device via Bluetooth so as to reduce costs.

Fig. 3 is a flowchart showing a third embodiment of a method for locating a wearable device according to an exemplary embodiment. As shown in Fig. 3, the method for locating a wearable device is mainly applied at a second terminal device side. The second terminal device can be terminal devices having a short range communication function such as a mobile phone, a laptop, a tablet computer and the like. The method for locating a wearable device may be implemented by the following steps.

In step S301, the second terminal device receives a notification message broadcast by the wearable device. The notification message is configured to instruct the second terminal device to establish a short range communication connection with the wearable device and instruct the second terminal device to report a connection notification to a server.

In step S302, the second terminal device establishes the short range communication connection with the wearable device, and sends the connection notification to the server, so that the server locates the wearable device according to each second terminal device. The connection notification is configured to indicate that the second terminal device has established the short range communication connection with the wearable device.

In embodiments of the present disclosure, the second terminal devices are terminal devices which surround the wearable device and agree with joining the function. In a range where short range communication is available, if a wearable device is disconnected from a previously connected first terminal device, the second terminal devices receive the notification message broadcast by the wearable device, and send a connection notification to the server after agreeing with establishing a connection with the wearable device.

The connection notification may carry the identity of the wearable device so that the server can distinguish multiple wearable devices according to identities and locate a wearable device which needs to be located.

In the method for locating a wearable device provided by this technical solution, after receiving a notification message sent from a nearby wearable device, second terminal devices establish a connection with the wearable device, and report to the server that the second terminal devices establish a connection with the wearable device, so that the server locates the wearable according to these second terminal device and determine the location of the wearable device. Consequently, a missing wearable device can be quickly located.

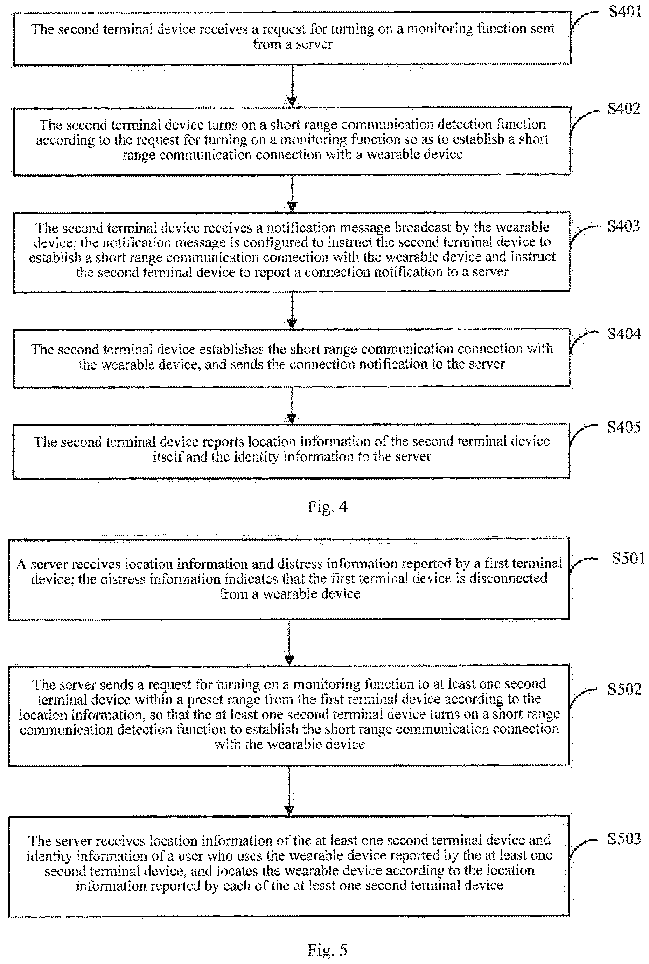

Fig. 4 is a flowchart of a fourth embodiment of a method for locating a wearable device according to a wearable device. As shown in Fig. 4, the present embodiment is performed by a second terminal device. On the basis of the embodiment as shown in Fig. 3, the method for locating a wearable device may be implemented by the following steps.

In step S401, the second terminal device receives a request for turning on a monitoring function sent from a server.

In step S402, the second terminal device turns on a short range communication detection function according to the request for turning on a monitoring function so as to establish a short range communication connection with a wearable device.

In step S403, the second terminal device receives a notification message broadcast by the wearable device. The notification message is configured to instruct the second terminal device to establish a short range communication connection with the wearable device and instruct the second terminal device to report a connection notification to a server.

In step S404, the second terminal device establishes the short range communication connection with the wearable device, and sends the connection notification to the server.

In step S405, the second terminal device reports location information of the second terminal device itself and the identity information to the server.

In embodiments of the present disclosure, after the first terminal device detects that the first terminal device is disconnected from the wearable device, the first terminal obtains the location information of the itself, and sends the location information and/or base station information of the itself and a request for locating the wearable device to a server. After receiving the request, the server sends a request for turning on a monitoring function to second terminal devices such as mobile phones surrounding the first terminal device to request help to find the wearable device. After the surrounding second terminal device agree with turning on the function, the second terminal devices turn on related detection function and establish a short range communication connection with the wearable device.

The second terminal devices obtain the location information of themselves using a GPS function. The second terminal device reports the location information of themselves and the identity information to the server, and the server can locate the wearable device according to the multiple pieces of location information, and can notify the first terminal device so as to find the wearable device.

Optionally, in order to reduce costs, the short range communication connection includes but not limited to Bluetooth connection. The connection established between the second terminal devices and the wearable device is a Bluetooth connection. The previous connection between the wearable device and the first terminal device may also be a Bluetooth connection.

In the method for locating a wearable device provided by the embodiment, the second terminal devices receive instructions from the server to turn on short range communication detection. The server controls the second terminal devices surrounding the first terminal device to help the server to find the wearable device. After the wearable device is lost, the wearable device can be located using the location information of the second terminal devices which surround the first terminal device and establish a connection with the wearable device. It is preferable that the connection between the terminal device and the wearable device is a Bluetooth connection to reduce costs.

Fig. 5 is a flowchart showing a fifth embodiment of a method for locating a wearable device according to an exemplary embodiment. As shown in Fig. 5, the method for locating a wearable device is mainly applied at a server side. Specifically, the method for locating a wearable device can be implemented by the following steps.

In step S501, a server receives location information and distress information reported by a first terminal device. The distress information indicates that the first terminal device is disconnected from a wearable device.

In step S502, the server sends a request for turning on a monitoring function to at least one second terminal device within a preset range from the first terminal device according to the location information, so that the at least one second terminal device turns on a short range communication detection function to establish the short range communication connection with the wearable device.

In step S503, the server receives location information of the at least one second terminal device and identity information of a user who uses the wearable device reported by the at least one second terminal device, and locates the wearable device according to the location information reported by each of the at least one second terminal device.

In embodiments of the present disclosure, the server receives the location information of the first terminal device itself and distress information requesting for locating the wearable device sent from the first terminal device. The first terminal device notifies the server that the first terminal is disconnected from the wearable. According to the location, the server sends a request for turning on monitoring to second terminal devices within a preset range surrounding the first terminal device, and then the second terminal devices report the location information of themselves. By controlling the surrounding second terminal devices to find the wearable device, the server can accurately and efficiently locate the wearable device.

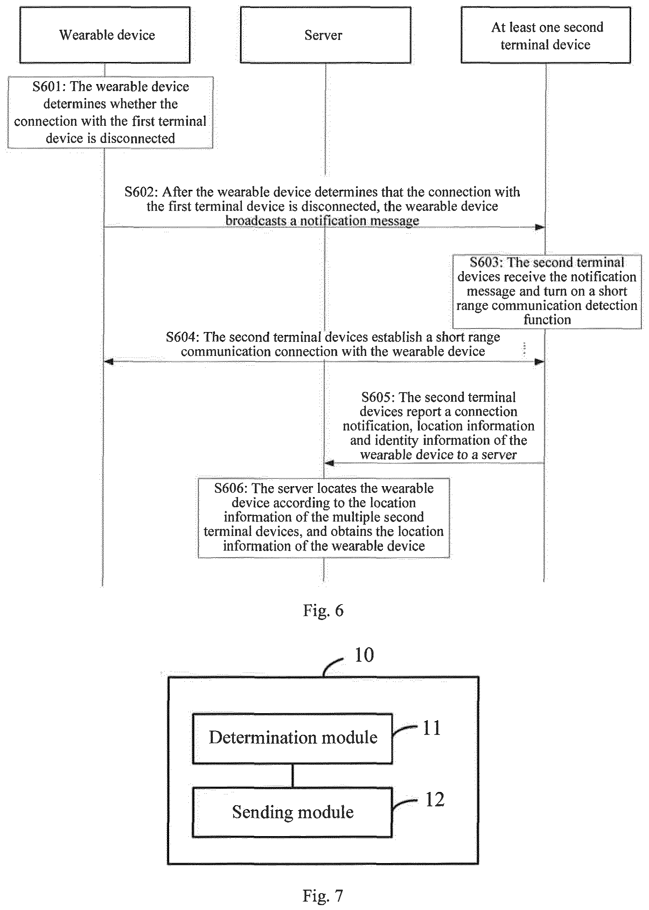

Fig. 6 is a flowchart showing an interaction example of a method for locating a wearable device according to an exemplary embodiment. On the basis of embodiments as shown in Figs. 1 to 5, Fig. 6 shows the interactions among a wearable device, second terminal devices and a server. Specifically, the method for locating a wearable device is implemented by the following steps.

In step S601, the wearable device determines whether the connection with the first terminal device is disconnected.

In step S602, after the wearable device determines that the connection with the first terminal device is disconnected, the wearable device broadcasts a notification message.

In step S603, the second terminal devices receive the notification message and turn on a short range communication detection function.

In step S604, the second terminal devices establish a short range communication connection with the wearable device.

In step S605, the second terminal devices report a connection notification, location information and identity information of the wearable device to a server.

In step S606, the server locates the wearable device according to the location information of the multiple second terminal devices, and obtains the location information of the wearable device.

In embodiments of the present disclosure, optionally, after the first terminal device detects the disconnection from the wearable device, the first terminal can repot the location information of itself and a locating request to the server to request for locating the wearable device. After the server obtains the location information of the wearable device, the server can notify the first terminal device so that the first terminal device can find the wearable device back.

In view of the above embodiments, the technical solutions may be used for finding lost wearable devices, or for finding lost children or old persons by the wearable devices after the children or the old persons get lost. The wearable device mentioned in the technical solutions takes forms of portable accessories which have some computation functions and are connectable to mobile phones and other types of terminals. The mainstream product forms include watch type products with wrist as a support (for example, watches, wristbands, bracelets, and the like), shoes type products with foot as a support (for example, shoes, stockings or future products worn on foot), and glasses type products with head as a support (for example, glasses, helmets, head bands, and the like). Non-mainstream product forms include smart clothing, schoolbags, walking sticks, fashion accessories and the like. The present disclosure does not impose specific limitations on applications.

The technical solutions provided by the present disclosure will be explained below with an example. For example, a child is worn with a wristband which establishes a Bluetooth connection with a mobile phone of a parent of the child. When the wristband establishes the Bluetooth connection with the mobile phone, bi-directional detections are turned on, i.e., after the Bluetooth connection is disconnected, the wristband can also detect the disconnection. The wristband broadcasts a notification message via Bluetooth or other radio signals such as WIFI. If mobile phones surrounding the wristband agree with joining the function, the mobile phones turn on the Bluetooth scanning in a certain internal to establish a Bluetooth with the wristband, and report to a server that the mobile phones establish a connection with an identified wristband. Thus, the server can locate the wristband according to these mobile phones.

In an optional solution, after the mobile phone of the parent detects that the Bluetooth connection with the wristband is disconnected, the mobile phone automatically reports the location information of the mobile phone itself and the base station information and the like to the server. The server automatically controls surrounding mobile phones or mobile phone within nearby base stations to turn on a Bluetooth monitoring function. If the surrounding mobile phones agree with this function and establish a Bluetooth connection with the wristband, these mobile phones promptly report the GPS information of themselves and the information of the wristband of this child to the server. The server locates the wristband according to the wristband information and GPS information reported by these mobile phones.

In the method for locating a wearable device provided by the present disclosure, the wearable device itself or the server triggers the terminal devices surrounding the wearable device to enter into a monitoring mode to monitor the information broadcast by the wearable device. The surrounding terminal devices establish a connection dynamically, and report the location information to the server. The server locates the wearable wristband to obtain the location information so as to help to quickly find the wearable device. It is preferable to use a Bluetooth connection to reduce costs.

Fig. 7 is a block diagram showing a first embodiment of a wearable device according to an exemplary embodiment. Referring to Fig. 7, the wearable device 10 includes a determination module 11 and a sending module 12.

The determination module 11 is configured to determine whether a short range communication connection with a first terminal device is disconnected.

The sending module 12 is configured to, if the determination module 11 determines that the short range communication connection with the first terminal device is disconnected, broadcast a notification message for instructing at least one second terminal device to establish a short range communication connection with the wearable device and instructing the at least one second terminal device to send a connection notification to a server so that the server locates the wearable device according to the at least one second terminal device.

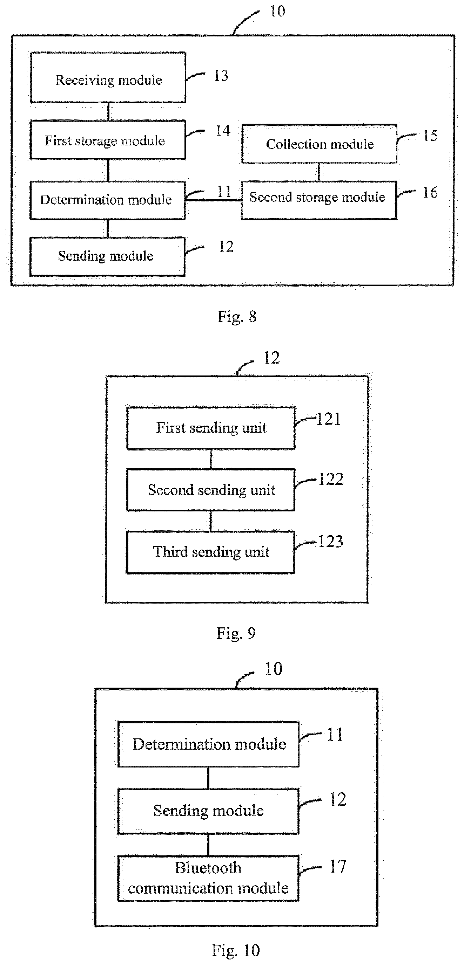

On the basis of the embodiment as shown in Fig. 7, Fig. 8 is a second embodiment of a wearable device according to an exemplary embodiment. Referring to Fig. 8, the wearable device 10 may further include a receiving module 13 and a first storage module 14, or a collection module 15 and a second storage module 16.

The receiving module 13 is configured to receive identity information sent from the first terminal device.

The first storage module 14 is configured to locally store the identity information.

The collection module 15 is configured to collect the identity information recorded by a user.

The second storage module 16 is configured to locally store the identity information.

The notification message incudes the identity information of a user who uses the wearable device and a distress signal, and the notification message is further configured to instruct the at least one second terminal device to report to the server location information of the at least one second terminal device and the identity information.

On the basis of the embodiment as shown in Fig. 7 or 8, Fig. 9 is a block diagram showing a third embodiment of a wearable device according to an exemplary embodiment. Referring to Fig. 9, the sending module 12 in the wearable device 10 includes a first sending unit 121, a second sending unit 122 or a third sending unit 123.

The first sending unit 121 is configured to broadcast the notification message via Bluetooth.

The second sending unit 121 is configured to broadcast the notification message via a wireless local area network.

The third sending unit 123 is configured to broadcast the notification message via a base station signal.

On the basis of the embodiments as shown in Figs. 7-9, Fig. 10 is a block diagram showing a fourth embodiment of a wearable device according to an exemplary embodiment. Referring to Fig. 10, the short range communication connection includes a Bluetooth connection, and the wearable device 10 further includes a Bluetooth communication module 17 configured to establish the Bluetooth connection with the first terminal device.

With respect to the wearable devices in the above embodiments, the specific manners for performing operations for individual modules therein and technical effects have been described in detail in the embodiments regarding the methods as shown in Figs. 1 to 6, which will not be elaborated herein.

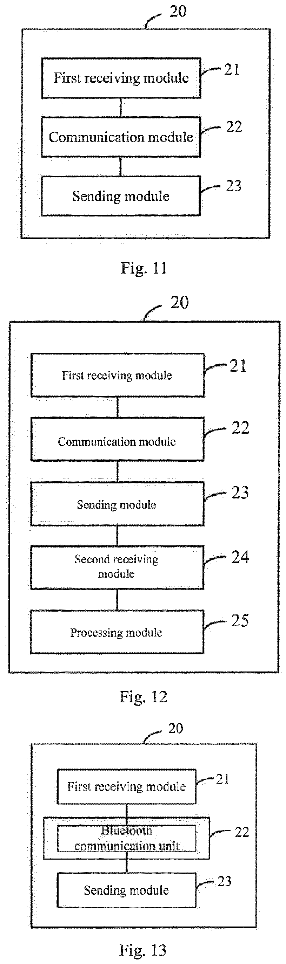

Fig. 11 is a block diagram showing a first embodiment of a terminal device according to an exemplary embodiment. Referring to Fig. 11, the terminal device 20 includes a first receiving module 21, a communication module 22 and a sending module 23.

The first receiving module 21 is configured to receive a notification message broadcast by a wearable device, wherein the notification message is configured to instruct the terminal device to establish a short range communication connection with the wearable device and instruct the terminal device to report a connection notification to a server.

The communication module 22 is configured to establish the short range communication connection with the wearable device.

The sending module 23 is configured to send the connection notification to the server, so that the server locates the wearable device according to each second terminal device, wherein the connection notification is configured to indicate that the second terminal device has established the short range communication connection with the wearable device.

Optionally, the notification message includes identity information of a user who uses the wearable device and a distress signal, and the sending module is further configured to report location information of the terminal device itself and the identity information to the server.

On the basis of the embodiment as shown in Fig. 11, Fig. 12 is a block diagram showing a second embodiment of a terminal device according to an exemplary embodiment. Referring to Fig. 12, the terminal device 20 further includes a second receiving module 24 and a processing module 25.

The second receiving module 24 is configured to a request for turning on a monitoring function sent from the server.

The processing module 25 is configured to turn on a short range communication detection function according to the request for turning on the monitoring function so that the communication module establishes the short range communication connection with the wearable device.

On the basis of the embodiment as shown in Fig. 11 or 12, Fig. 13 is a block diagram showing a third embodiment of a terminal device according to an exemplary embodiment. Referring to Fig. 13, the short range communication connection includes a Bluetooth connection, and the communication module 22 includes a Bluetooth communication unit 221 configured to establish the Bluetooth connection with the wearable device.

With respect to the wearable devices in the above embodiments, the specific manners for performing operations for individual modules therein and technical effects have been described in detail in the embodiments regarding the methods as shown in Figs. 1 to 6, which will not be elaborated herein.

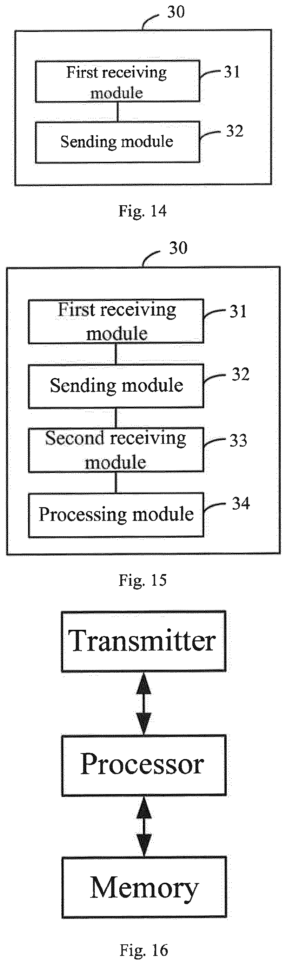

Fig. 14 is a block diagram showing a first embodiment of a server according to an exemplary embodiment. Referring to Fig. 14, the server 30 includes a first receiving module 31 and a sending module 32.

The first receiving module 31 is configured to receive location information and distress information reported by a first terminal device, wherein the distress information indicates that the first terminal device is disconnected from a wearable device.

The sending module 32 is configured to send a request for turning on a monitoring function to at least one second terminal device within a preset range from the first terminal device according to the location information, so that the at least one second terminal device turns on a short range communication detection function to establish the short range communication connection with the wearable device.

On the basis of the embodiment as shown in Fig. 14, Fig. 15 is a block diagram showing a second embodiment of a server according to an exemplary embodiment. Referring to Fig. 15, the server 30 further includes a second receiving module 33 and a processing module 34.

The second receiving module 33 is configured to receive location information of the at least one second terminal device and identity information of a user who uses the wearable device reported by the at least one second terminal device.

The processing module 34 is configured to locate the wearable device according to the location information reported by each of the at least one second terminal device.

With respect to the wearable devices in the above embodiments, the specific manners for performing operations for individual modules therein and technical effects have been described in detail in the embodiments regarding the methods as shown in Figs. 1 to 6, which will not be elaborated herein.

The internal modules and structure schematics of the wearable device are described above. Fig. 16 is a block diagram showing a physical body of a wearable device according to an exemplary embodiment. Referring to Fig. 16, the wearable device can be specifically implemented as including:
a transmitter;
a processor configured to control executable instructions to run; and
a memory for storing instructions executable by the processor;
wherein the processor is configured to determine whether a short range communication connection with a first terminal device is disconnected;
the transmitter is configured to, if the processor determines that the short range communication connection with the first terminal device is disconnected, broadcast a notification message for instructing at least one second terminal device to establish a short range communication connection with the wearable device and instructing the at least one second terminal device to send a connection notification to a server so that the server locates the wearable device according to the at least one second terminal device.

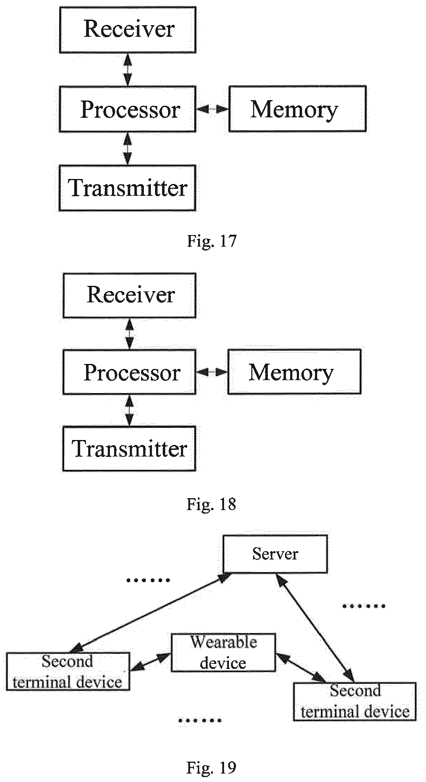

The internal modules and structure schematics of the terminal device are described above. Fig. 17 is a block diagram showing a physical body of a terminal device according to an exemplary embodiment. Referring to Fig. 17, the terminal device can be specifically implemented as including:
a receiver;
a transmitter;
a processor configured to control executable instructions to run; and
a memory for storing instructions executable by the processor;
wherein the receiver is configured to receive a notification message broadcast by a wearable device, wherein the notification message is configured to instruct the terminal device to establish a short range communication connection with the wearable device and instruct the terminal device to report a connection notification to a server; and
the processor is configured to establish the short range communication connection with the wearable device, and
the transmitter is configured to send the connection notification to the server, so that the server locates the wearable device according to each second terminal device, wherein the connection notification is configured to indicate that the second terminal device has established the short range communication connection with the wearable device.

The internal modules and structure schematics of the server are described above. Fig. 18 is a block diagram showing a physical body of a server according to an exemplary embodiment. Referring to Fig. 18, the server can be specifically implemented as including:
a receiver;
a transmitter;
a processor configured to control executable instructions to run; and
a memory for storing instructions executable by the processor;
wherein the receiver is configured to receive location information and distress information reported by a first terminal device, wherein the distress information indicates that the first terminal device is disconnected from a wearable device;
the transmitter is configured to send a request for turning on a monitoring function to at least one second terminal device within a preset range from the first terminal device according to the location information, so that the at least one second terminal device turns on a short range communication detection function to establish the short range communication connection with the wearable device;
the receiver is further configured to receive location information of the at least one second terminal device and identity information of a user who uses the wearable device reported by the at least one second terminal device; and
the processor is configured to locate the wearable device according to the location information reported by each of the at least one second terminal device.

In the above embodiments of physical bodies of the wearable device, the terminal device and the server, it shall be understood that the processor may be a Central Processing Unit (CPU), or may be other general-purpose processor, Digital Signal Processor (DSP), Application Specific Integrated Circuit (ASIC), and the like. The general-purpose processor may be a microprocessor or any common processor. The above memory may be a Read Only Memory (ROM), a Random Access Memory (RAM), a flash, a hard disk, or a solid state hard disk. The steps in the methods disclosed with reference to embodiments of the present disclosure may be embodied as performed by hardware processors, or may be embodied as performed by hardware in combination with software modules in the processor.

Fig. 19 is a schematic diagram showing a system for locating a wearable device according to an exemplary embodiment. Referring to Fig. 19, the system for locating a wearable device includes a wearable device, a server and at least one second terminal device.

The wearable device is configured to:
determine whether a short range communication connection with a first terminal device is disconnected; and
if it is determined that the short range communication connection with the first terminal device is disconnected, broadcast a notification message for instructing at least one second terminal device to establish a short range communication connection with the wearable device and instructing the at least one second terminal device to send a connection notification to a server so that the server locates the wearable device according to the at least one second terminal device.

Each of the second terminal devices is configured to:
receive a notification message broadcast by the wearable device, wherein the notification message is configured to instruct the second terminal device to establish a short range communication connection with the wearable device and instruct the second terminal device to report a connection notification to a server; and
establish the short range communication connection with the wearable device, and send the connection notification to the server, so that the server locates the wearable device according to each second terminal device, wherein the connection notification is configured to indicate that the second terminal device has established the short range communication connection with the wearable device.

The server is configured to:
receive location information and distress information reported by a first terminal device, wherein the distress information indicates that the first terminal device is disconnected from a wearable device; and
send a request for turning on a monitoring function to at least one second terminal device within a preset range from the first terminal device according to the location information, so that the at least one second terminal device turns on a short range communication detection function to establish the short range communication connection with the wearable device;
receive location information of the at least one second terminal device and identity information of a user who uses the wearable device reported by the at least one second terminal device, and locate the wearable device according to the location information reported by each of the at least one second terminal device.

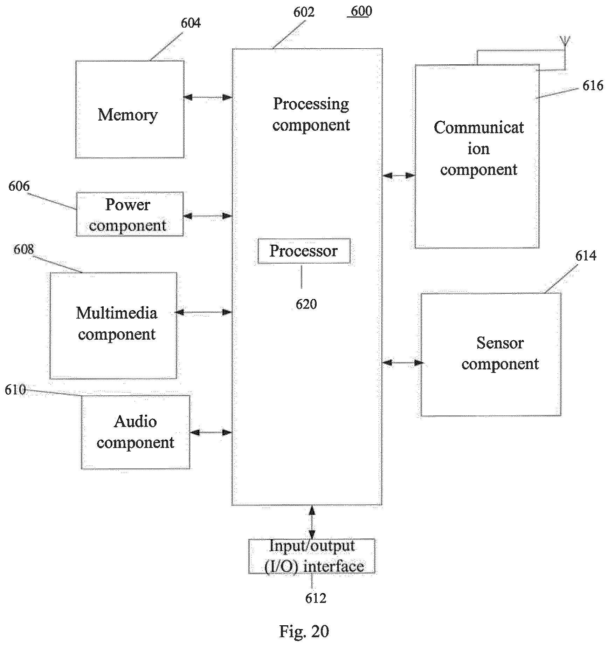

Fig. 20 is a block diagram showing a wearable device 600 according to an exemplary embodiment. The wearable device 600 may be a smart watch, a wristband, wearable exercise equipment or wearable medical device and the like. Referring to Fig. 20, the wearable device 600 may include one or more of the following components: a processing component 602, a memory 604, a power component 606, a sensor component 614, and a communication component 616.

Optionally, the wearable device 600 may include a multimedia component 608, an audio component 610, an input/output (I/O) interface 612 and the like.

The processing component 602 typically controls overall operations of the wearable device 600, such as the operations associated with display, data communications, multimedia operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the wearable device 600. Examples of such data include instructions for any applications or methods operated on the wearable device 600, various data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the wearable device 600. The power component 606 may include a power management system, one or more power sources, and any other components associated with the generation, management, and distribution of power in the wearable device 600.

The multimedia component 608 includes a screen providing an output interface between the wearable device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 610 is configured to output and/or input audio signals. For example, the audio component 610 includes a microphone ("MIC") configured to receive an external audio signal when the electronic device 600 is in an operation mode, such as a call mode, a recording mode, and a voice recognition mode. The received audio signal may be further stored in the memory 604 or transmitted via the communication component 616. In an embodiment, the audio component 610 further includes a speaker to output audio signals.

The I/O interface 612 provides an interface between the processing component 602 and peripheral interface modules, such as a keyboard, a click wheel, buttons, and the like.

The sensor component 614 includes one or more sensors to provide status assessments of various aspects of the wearable device 600. For instance, the sensor component 614 may detect an open/closed status of the wearable device 600, relative positioning of components, e.g., the display and the keypad, of the wearable device 600, a change in position of the wearable device 600 or a component of the wearable device 600, a presence or absence of user contact with the wearable device 600, an orientation or an acceleration/deceleration of the wearable device 600, and a change in temperature of the wearable device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the wearable device 600 and other devices. The wearable device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the wearable device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the wearable device 600, for performing the above-described methods. For example, the non-transitory computer-readable storage medium may be a ROM, a RAM, a CD-ROM, a magnetic tape, a floppy disc, an optical data storage device, and the like.

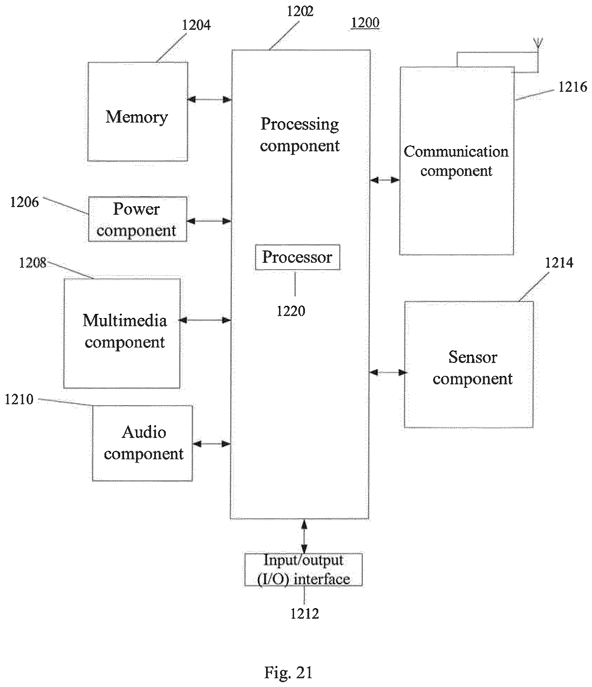

Fig. 21 is a block diagram showing a terminal device 1200 according to an exemplary embodiment. For example, the terminal device 1200 may be a device capable of accessing networks such as a mobile phone, a computer, a digital broadcast terminal, a messaging device, a gaming console, a tablet, a medical device, exercise equipment, a smart home device, a smart home appliance, and the like.

Referring to Fig. 21, the terminal device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the terminal device 1200, such as the operations associated with display, telephone calls, data communications, multimedia operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 802 may include a multimedia module to facilitate the interaction between the multimedia component 1208 and the processing component 1202.

The memory 1204 is configured to store various types of data to support the operation of the terminal device 1200. Examples of such data include instructions for any applications or methods operated on the terminal device 800, various data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the terminal device 1200. The power component 1206 may include a power management system, one or more power sources, and any other components associated with the generation, management, and distribution of power in the terminal device 1200.

The multimedia component 1208 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 1210 is configured to output and/or input audio signals. For example, the audio component 1210 includes a microphone ("MIC") configured to receive an external audio signal when the terminal device 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons.

The sensor component 1214 includes one or more sensors to provide status assessments of various aspects of the terminal device 1200. For instance, the sensor component 1214 may detect an open/closed status of the terminal device 1200, relative positioning of components, e.g., the display and the keypad, of the terminal device 1200, a change in position of the terminal device 1200 or a component of the terminal device 1200, a presence or absence of user contact with the terminal device 1200, an orientation or an acceleration/deceleration of the terminal device 1200, and a change in temperature of the terminal device 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the terminal device 1200 and other devices. The terminal device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the terminal device 1200, for performing the above-described methods. For example, the non-transitory computer-readable storage medium may be a ROM, a RAM, a CD-ROM, a magnetic tape, a floppy disc, an optical data storage device, and the like.

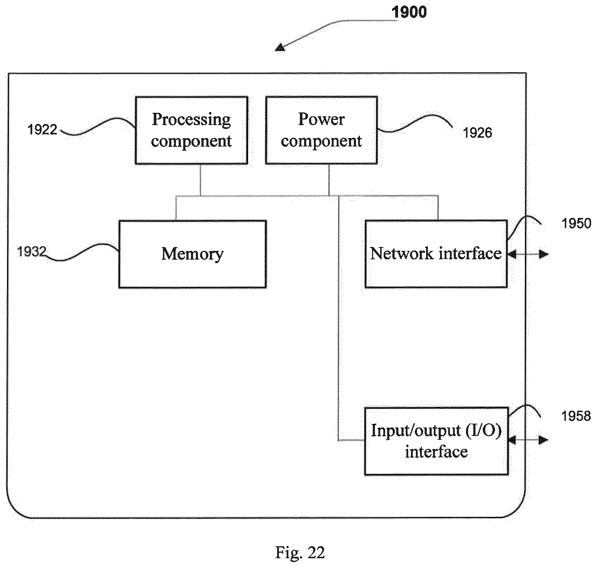

Fig. 22 is a block diagram showing a server 1900 according to an exemplary embodiment. Referring to Fig. 22, the server 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the solutions for locating a wearable device at the server side.

The server 1900 may also include a power component 1926 configured to perform power management of the server 1900, wired or wireless network interface(s) 1950 configured to connect the server 1900 to a network, and an input/output (I/O) interface 1958. The server 1900 may operate based on an operating system stored in the memory 1932, such as Windows Server™, Mac OS X™, Unix™, Linux™, FreeBSD™, or the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for locating a wearable device, the method comprising:
determining (SI01), by the wearable device, whether a short range communication connection with a first terminal device is disconnected; and
upon determining that the short range communication connection with the first terminal device is disconnected, broadcasting (S102), by the wearable device, a notification message for instructing at least one second terminal device to establish a short range communication connection with the wearable device and instructing the at least one second terminal device to send a connection notification to a server so that the server locates the wearable device according to the at least one second terminal device;
**characterised in that** the notification message comprises identity information of a user who uses the wearable device and a distress signal, and the notification message is further configured to instruct the at least one second terminal device to report to the server location information of the at least one second terminal device and the identity information.

2. The method according to claim 1, wherein before determining (S101), by the wearable device, whether the short range communication connection with the first terminal device is disconnected, the method further comprises:
receiving, at the wearable device, the identity information sent from the first terminal device, and locally storing the identity information; or
collecting, by the wearable device, the identity information recorded by a user, and locally storing the identity information.

3. The method according to any one of claims 1 or 2, wherein the broadcasting (SI02), by the wearable device, the notification message comprises:
broadcasting, by the wearable device, the notification message via Bluetooth; or
broadcasting, by the wearable device, the notification message via a wireless local area network; or
broadcasting, by the wearable device, the notification message via a base station signal.

4. The method according to any one of claims 1 or 2, wherein the short range communication connection comprises a Bluetooth connection;
wherein, before determining, by the wearable device, whether the short range communication connection with the first terminal device is disconnected, the method further comprises:
establishing, by the wearable device, the Bluetooth connection with the first terminal device.

5. A method according to any preceding claim, the method comprising:
receiving (S301), by a second terminal device, the notification message broadcast by the wearable device; and
establishing (S302), by the second terminal device, the short range communication connection with the wearable device, and sending the connection notification to the server, so that the server locates the wearable device according to each second terminal device, wherein the connection notification is configured to indicate that the second terminal device has established the short range communication connection with the wearable device.

6. The method according to claim 5, wherein before receiving (S301), by the second terminal device, the notification message broadcast by the wearable device, the method further comprises:
receiving (S401), by the second terminal device, a request for turning on a monitoring function sent from the server, the server sending the request upon receiving location information and a request for locating the wearable device from the first terminal device; and
turning (S402) on, by the second terminal device, a short range communication detection function according to the request for turning on the monitoring function to establish the short range communication connection with the wearable device.

7. The method according to any one of claims 5-6, wherein the short range communication connection comprises a Bluetooth connection, and the establishing (S302), by the second terminal device, the short range communication connection with the wearable device, comprises:
establishing, by the second terminal device, the Bluetooth connection with the wearable device.

8. The method of any preceding claim, the method further comprising:
receiving (S501), by a server, location information and distress information reported by a first terminal device, wherein the distress information indicates that the first terminal device is disconnected from a wearable device; and
sending (S502), by the server, a request for turning on a monitoring function to at least one second terminal device within a preset range from the first terminal device according to the location information, so that the at least one second terminal device turns on a short range communication detection function to establish the short range communication connection with the wearable device.

9. The method according to claim 8, further comprising:
receiving (S503), by the server, location information of the at least one second terminal device and identity information of a user who uses the wearable device reported by the at least one second terminal device, and locating the wearable device according to the location information reported by each of the at least one second terminal device.

10. A wearable device, comprising:
a determination module (11) configured to determine whether a short range communication connection with a first terminal device is disconnected; and
a sending module (12) configured to, upon the determination module determining that the short range communication connection with the first terminal device is disconnected, broadcast a notification message for instructing at least one second terminal device to establish a short range communication connection with the wearable device and instructing the at least one second terminal device to send a connection notification to a server so that server locates the wearable device according to the at least one second terminal device;
**characterised in that** the notification message comprises the identity information of a user who uses the wearable device and a distress signal, and the notification message is further configured to instruct the at least one second terminal device to report to the server location information of the at least one second terminal device and the identity information.

11. The wearable device according to claim 10, further comprising:
a receiving module (13) configured to receive identity information sent from the first terminal device; and
a first storage module (14) configured to locally store the identity information;
or,
a collection module (15) configured to collect the identity information recorded by a user; and
a second storage module (16) configured to locally store the identity information.

12. A system comprising the wearable device of claim 11 and a terminal device, the terminal device comprising:
a first receiving module (21) configured to receive a notification message broadcast by a wearable device, wherein the notification message is configured to instruct the terminal device to establish a short range communication connection with the wearable device and instruct the terminal device to report a connection notification to a server;
a communication module (22) configured to establish the short range communication connection with the wearable device; and
a sending module (23) configured to send the connection notification to the server, so that the server locates the wearable device according to the terminal device, wherein the connection notification is configured to indicate that the terminal device has established the short range communication connection with the wearable device.

13. The system of claim 12, further comprising a server, the server comprising:
a first receiving module (31) configured to receive location information and distress information reported by a first terminal device, wherein the distress information indicates that the first terminal device is disconnected from a wearable device; and
a sending module (32) configured to send a request for turning on a monitoring function to at least one second terminal device within a preset range from the first terminal device according to the location information, so that the at least one second terminal device turns on a short range communication detection function to establish the short range communication connection with the wearable device.

## Patentansprüche

1. Verfahren zur Bestimmung der Position einer am Körper tragbaren Vorrichtung, das Folgendes aufweist:
Ermitteln (S101) durch die am Körper tragbare Vorrichtung, ob eine Nahbereichskommunikationsverbindung mit einer ersten Endgerätvorrichtung unterbrochen ist; und
bei Ermitteln, dass die Nahbereichskommunikationsverbindung mit der ersten Endgerätvorrichtung unterbrochen ist, Übertragen (S102), durch die am Körper tragbare Vorrichtung, einer Anzeigenachricht als Rundruf zum Anweisen wenigstens einer zweiten Endgerätvorrichtung, eine Nahbereichskommunikationsverbindung mit der am Körper tragbaren Vorrichtung herzustellen, und zum Anweisen der wenigstens einen zweiten Endgerätvorrichtung, eine Verbindungsanzeige an einen Server zu senden, so dass der Server die Position der am Körper tragbaren Vorrichtung gemäß der wenigstens einen zweiten Endgerätvorrichtung bestimmt;
**dadurch gekennzeichnet, dass** die Anzeigenachricht Identitätsinformationen eines Benutzers, der die am Körper tragbare Vorrichtung verwendet, und einen Notruf aufweist und die Anzeigenachricht ferner zum Anweisen der wenigstens einen zweiten Endgerätvorrichtung, dem Server Positionsinformationen der wenigstens einen zweiten Endgerätvorrichtung und die Identitätsinformationen zu melden, konfiguriert ist.

2. Verfahren nach Anspruch 1, wobei das Verfahren vor dem Ermitteln (S101), durch die am Körper tragbare Vorrichtung, ob die Nahbereichskommunikationsverbindung mit der ersten Endgerätvorrichtung unterbrochen ist, ferner Folgendes aufweist:
Empfangen, an der am Körper tragbaren Vorrichtung, der von der ersten Endgerätvorrichtung gesendeten Identitätsinformationen und örtliches Speichern der Identitätsinformationen; oder
Erfassen, durch die am Körper tragbare Vorrichtung, der durch einen Benutzer gemeldeten Identitätsinformationen und örtliches Speichern der Identitätsinformationen.

3. Verfahren nach einem der Ansprüche 1 oder 2, wobei das Übertragen (S102) der Anzeigenachricht als Rundruf durch die am Körper tragbare Vorrichtung Folgendes aufweist:
Übertragen, durch die am Körper tragbare Vorrichtung, der Anzeigenachricht als Rundruf über Bluetooth; oder
Übertragen, durch die am Körper tragbare Vorrichtung, der Anzeigenachricht als Rundruf über ein drahtloses lokales Netzwerk; oder
Übertragen, durch die am Körper tragbare Vorrichtung, der Anzeigenachricht als Rundruf über ein Basisstationssignal.

4. Verfahren nach einem der Ansprüche 1 oder 2, wobei die Nahbereichskommunikationsverbindung eine Bluetooth-Verbindung aufweist;
wobei das Verfahren vor dem Ermitteln durch die am Körper tragbare Vorrichtung, ob die Nahbereichskommunikationsverbindung mit der ersten Endgerätvorrichtung unterbrochen ist, ferner Folgendes aufweist:
Herstellen der Bluetooth-Verbindung mit der ersten Endgerätvorrichtung durch die am Körper tragbare Vorrichtung.

5. Verfahren nach einem der vorhergehenden Ansprüche, wobei das Verfahren Folgendes aufweist:
Empfangen (S301), durch eine zweite Endgerätvorrichtung, der durch die am Körper tragbare Vorrichtung als Rundruf übertragenen Anzeigenachricht; und
Herstellen (S302), durch die zweite Endgerätvorrichtung, der Nahbereichskommunikationsverbindung mit der am Körper tragbaren Vorrichtung und Senden der Verbindungsanzeige an den Server, so dass der Server die Position der am Körper tragbaren Vorrichtung gemäß jeder zweiten Endgerätvorrichtung bestimmt, wobei die Verbindungsanzeige zum Angeben, dass die zweite Endgerätvorrichtung die Nahbereichskommunikationsverbindung mit der am Körper tragbaren Vorrichtung hergestellt hat, konfiguriert ist.

6. Verfahren nach Anspruch 5, wobei das Verfahren vor Empfangen (S301), durch die zweite Endgerätvorrichtung, der durch die am Körper tragbare Vorrichtung als Rundruf übertragenen Anzeigenachricht ferner Folgendes aufweist:
Empfangen (S401), durch die zweite Endgerätvorrichtung, einer vom Server gesendeten Anforderung zum Einschalten einer Überwachungsfunktion, wobei der Server die Anforderung bei Empfang von Positionsinformationen und einer Anforderung zum Bestimmen der Position der am Körper tragbaren Vorrichtung von der ersten Endgerätvorrichtung sendet; und
Einschalten (S402), durch die zweite Endgerätvorrichtung, einer Nahbereichskommunikations-Erkennungsfunktion gemäß der Anforderung zum Einschalten der Überwachungsfunktion, um die Nahbereichskommunikationsverbindung mit der am Körper tragbaren Vorrichtung herzustellen.

7. Verfahren nach einem der Ansprüche 5 bis 6, wobei die Nahbereichskommunikationsverbindung eine Bluetooth-Verbindung aufweist und das Herstellen (S302) der Nahbereichskommunikationsverbindung mit der am Körper tragbaren Vorrichtung durch die zweite Endgerätvorrichtung Folgendes aufweist:
Herstellen der Bluetooth-Verbindung mit der am Körper tragbaren Vorrichtung durch die zweite Endgerätvorrichtung.

8. Verfahren nach einem der vorhergehenden Ansprüche, wobei das Verfahren ferner Folgendes aufweist:
Empfangen (S501), durch einen Server, von Positionsinformationen und Notrufinformationen, die von einer ersten Endgerätvorrichtung gemeldet wurden, wobei die Notrufinformationen angeben, dass die erste Endgerätvorrichtung von einer am Körper tragbaren Vorrichtung getrennt wurde; und
Senden (S502), durch den Server, einer Anforderung zum Einschalten einer Überwachungsfunktion an wenigstens eine zweite Endgerätvorrichtung innerhalb einer vorgegebenen Reichweite von der ersten Endgerätvorrichtung gemäß den Positionsinformationen, so dass die wenigstens eine zweite Endgerätvorrichtung eine Nahbereichskommunikations-Erkennungsfunktion einschaltet, um die Nahbereichskommunikationsverbindung mit der am Körper tragbaren Vorrichtung herzustellen.

9. Verfahren nach Anspruch 8, das ferner Folgendes aufweist:
Empfangen (S503), durch den Server, von Positionsinformationen der wenigstens einen zweiten Endgerätvorrichtung und Identitätsinformationen eines Benutzers, der die am Körper tragbare Vorrichtung verwendet, die von der wenigstens einen zweiten Endgerätvorrichtung gemeldet wurden, und Bestimmen der Position der am Körper tragbaren Vorrichtung gemäß der durch jede der wenigstens einen zweiten Endgerätvorrichtung gemeldeten Positionsinformationen.

10. Am Körper tragbare Vorrichtung, die Folgendes aufweist:
ein Ermittlungsmodul (11), das zum Ermitteln, ob eine Nahbereichskommunikationsverbindung mit einer ersten Endgerätvorrichtung unterbrochen ist, konfiguriert ist; und
ein Sendemodul (12), das zum Übertragen, bei Ermitteln, dass die Nahbereichskommunikationsverbindung mit der ersten Endgerätvorrichtung unterbrochen ist, einer Anzeigenachricht als Rundruf zum Anweisen wenigstens einer zweiten Endgerätvorrichtung, eine Nahbereichskommunikationsverbindung mit der am Körper tragbaren Vorrichtung herzustellen, und zum Anweisen der wenigstens einen zweiten Endgerätvorrichtung, eine Verbindungsanzeige an einen Server zu senden, so dass der Server die Position der am Körper tragbaren Vorrichtung gemäß der wenigstens einen zweiten Endgerätvorrichtung bestimmt, konfiguriert ist;
**dadurch gekennzeichnet, dass** die Anzeigenachricht Identitätsinformationen eines Benutzers, der die am Körper tragbare Vorrichtung verwendet, und einen Notruf aufweist und die Anzeigenachricht ferner zum Anweisen der wenigstens einen zweiten Endgerätvorrichtung, dem Server Positionsinformationen der wenigstens einen zweiten Endgerätvorrichtung und die Identitätsinformationen zu melden, konfiguriert ist.

11. Am Körper tragbare Vorrichtung nach Anspruch 10, die ferner Folgendes aufweist:
ein Empfangsmodul (13), das zum Empfangen der von der ersten Endgerätvorrichtung gesendeten Identitätsinformationen konfiguriert ist; und
ein erstes Speichermodul (14), das zum örtlichen Speichern der Identitätsinformationen konfiguriert ist; oder
ein Erfassungsmodul (15), das zum Erfassen der durch einen Benutzer aufgezeichneten Identitätsinformationen konfiguriert ist; und
ein zweites Speichermodul (16), das zum örtlichen Speichern der Identitätsinformationen konfiguriert ist.

12. System, das die am Körper tragbare Vorrichtung nach Anspruch 11 und eine Endgerätvorrichtung aufweist, wobei die Endgerätvorrichtung Folgendes aufweist:
ein erstes Empfangsmodul (21), das zum Empfangen einer durch eine am Körper tragbare Vorrichtung als Rundruf übertragenen Anzeigenachricht konfiguriert ist, wobei die Anzeigenachricht konfiguriert ist zum Anweisen der Endgerätvorrichtung, eine Nahbereichskommunikationsverbindung mit der am Körper tragbaren Vorrichtung herzustellen, und zum Anweisen der Endgerätvorrichtung, eine Verbindungsanzeige einem Server zu melden;
ein Kommunikationsmodul (22), das zum Herstellen der Nahbereichskommunikationsverbindung mit der am Körper tragbaren Vorrichtung konfiguriert ist; und
ein Sendemodul (23), das zum Senden der Verbindungsanzeige an den Server, so dass der Server die Position der am Körper tragbaren Vorrichtung gemäß der Endgerätvorrichtung bestimmt, konfiguriert ist, wobei die Verbindungsanzeige zum Angeben, dass die zweite Endgerätvorrichtung die Nahbereichskommunikationsverbindung mit der am Körper tragbaren Vorrichtung hergestellt hat, konfiguriert ist.

13. System nach Anspruch 12, das ferner einen Server aufweist, wobei der Server Folgendes aufweist:
ein erstes Empfangsmodul (31), das zum Empfangen von Positionsinformationen und Notrufinformationen, die von einer ersten Endgerätvorrichtung gemeldet werden, konfiguriert ist, wobei die Notrufinformationen angeben, dass die erste Endgerätvorrichtung von einer am Körper tragbaren Vorrichtung getrennt wurde; und
ein Sendemodul (32), das konfiguriert ist zum Senden einer Anforderung zum Einschalten einer Überwachungsfunktion an wenigstens eine zweite Endgerätvorrichtung innerhalb einer vorgegebenen Reichweite von der ersten Endgerätvorrichtung gemäß den Positionsinformationen, so dass die wenigstens eine zweite Endgerätvorrichtung eine Nahbereichskommunikations-Erkennungsfunktion einschaltet, um die Nahbereichskommunikationsverbindung mit der am Körper tragbaren Vorrichtung herzustellen.

## Revendications

1. Procédé de localisation d'un dispositif vestimentaire, le procédé comprenant :
déterminer (S101), par le dispositif vestimentaire, si une connexion de communication à courte portée avec un premier dispositif terminal est déconnectée ; et
en déterminant que la connexion de communication à courte portée avec le premier dispositif terminal est déconnectée, diffuser (S 102), par le dispositif vestimentaire, un message de notification pour instruire au moins un deuxième dispositif terminal d'établir une connexion de communication à courte portée avec le dispositif vestimentaire et instruire le au moins un deuxième dispositif terminal d'envoyer une notification de connexion à un serveur de telle sorte que le serveur localise le dispositif vestimentaire conformément à le au moins un deuxième dispositif terminal ;
**caractérisé en ce que**
le message de notification comprend une information d'identité d'un utilisateur qui utilise le dispositif vestimentaire et un signal de détresse, et le message de notification est configuré en outre pour instruire le au moins un deuxième dispositif terminal de signaler au serveur l'information de localisation du au moins un deuxième dispositif terminal et l'information d'identité.

2. Procédé selon la revendication 1, dans lequel avant de déterminer (S101), par le dispositif vestimentaire, si la connexion de communication à courte portée avec le premier dispositif terminal est déconnectée, le procédé comprend en outre :
recevoir, au dispositif vestimentaire, l'information d'identité envoyée du premier dispositif terminal, et stocker localement l'information d'identité ; ou bien
recueillir, par le dispositif vestimentaire, l'information d'identité enregistrée par un utilisateur, et stocker localement l'information d'identité.

3. Procédé selon l'une quelconque des revendications 1 ou 2, dans lequel la diffusion (S102), par le dispositif vestimentaire, du message de notification comprend :
diffuser, par le dispositif vestimentaire, le message de notification via Bluetooth ; ou bien
diffuser, par le dispositif vestimentaire, le message de notification via un réseau local sans fil ; ou bien
diffuser, par le dispositif vestimentaire, le message de notification via un signal de station de base.

4. Procédé selon l'une quelconque des revendications 1 ou 2, dans lequel la connexion de communication à courte portée comprend une connexion Bluetooth ;
dans lequel, avant de déterminer, par le dispositif vestimentaire, si la connexion de communication à courte portée avec le premier dispositif terminal est déconnectée, le procédé comprend en outre :
établir, par le dispositif vestimentaire, la connexion Bluetooth avec le premier dispositif terminal.

5. Procédé selon l'une quelconque des revendications précédentes, le procédé comprenant :
recevoir (S301), par un deuxième dispositif terminal, le message de notification diffusé par le dispositif vestimentaire ; et
établir (S302), par le deuxième dispositif terminal, la connexion de communication à courte portée avec le dispositif vestimentaire, et envoyer la notification de connexion au serveur, de telle sorte que le serveur localise le dispositif vestimentaire conformément à chaque deuxième dispositif terminal, où la notification de connexion est configurée pour indiquer que le deuxième dispositif terminal a établi la connexion de communication à courte portée avec le dispositif vestimentaire.

6. Procédé selon la revendication 5, dans lequel avant de recevoir (S301), par le deuxième dispositif terminal, le message de notification diffusé par le dispositif vestimentaire, le procédé comprend en outre :
recevoir (S401), par le deuxième dispositif terminal, une requête de mise en circuit d'une fonction de surveillance envoyée du serveur, le serveur envoyant la requête en recevant l'information de localisation et une requête de localisation du dispositif vestimentaire provenant du premier dispositif terminal ; et
mettre en circuit (S402), par le deuxième dispositif terminal, une fonction de détection de communication à courte portée conformément à la requête de mise en circuit de la fonction de surveillance afin d'établir la connexion de communication à courte portée avec le dispositif vestimentaire.

7. Procédé selon l'une quelconque des revendications 5-6, dans lequel la connexion de communication à courte portée comprend une connexion Bluetooth, et le fait d'établir (S302), par le deuxième dispositif terminal, la connexion de communication à courte portée avec le dispositif vestimentaire, comprend :
établir, par le deuxième dispositif terminal, la connexion Bluetooth avec le dispositif vestimentaire.

8. Procédé selon l'une quelconque des revendications précédentes, le procédé comprenant en outre :
recevoir (S501), par un serveur, une information de localisation et une information de détresse signalées par un premier dispositif terminal, où l'information de détresse indique que le premier dispositif terminal est déconnecté du dispositif vestimentaire ; et
envoyer (S502), par le serveur, une requête de mise en circuit d'une fonction de surveillance à au moins un deuxième dispositif terminal à une portée préréglée du premier dispositif terminal conformément à l'information de localisation, de telle sorte que le au moins un deuxième dispositif terminal met en circuit une fonction de détection de communication à courte portée pour établir la connexion de communication à courte portée avec le dispositif vestimentaire.

9. Procédé selon la revendication 8, comprenant en outre :
recevoir (S503), par le serveur, une information de localisation du au moins un deuxième dispositif terminal et une information d'identité d'un utilisateur qui utilise le dispositif vestimentaire signalées par le au moins un deuxième dispositif terminal, et localiser le dispositif vestimentaire conformément à l'information de localisation signalée par chacun du au moins un deuxième dispositif terminal.

10. Dispositif vestimentaire, comprenant :
un module de détermination (11) configuré pour déterminer si une connexion de communication à courte portée avec un premier dispositif terminal est déconnectée ; et
un module d'envoi (12) configuré pour, lorsque le module de détermination détermine que la connexion de communication à courte portée avec le premier dispositif terminal est déconnectée, diffuser un message de notification pour instruire au moins un deuxième dispositif terminal d'établir une connexion de communication à courte portée avec le dispositif vestimentaire et instruite le au moins un deuxième dispositif terminal d'envoyer une notification de connexion à un serveur de telle sorte que le serveur localise le dispositif vestimentaire conformément à le au moins un deuxième dispositif terminal ; **caractérisé en ce que**
le message de notification comprend l'information d'identité d'un utilisateur qui utilise le dispositif vestimentaire et un signal de détresse, et le message de notification est configuré en outre pour instruire le au moins un deuxième dispositif terminal de signaler au serveur l'information de localisation du au moins un deuxième dispositif terminal et l'information d'identité.

11. Dispositif vestimentaire selon la revendication 10, comprenant en outre :
un module de réception (13) configuré pour recevoir une information d'identité envoyée du premier dispositif terminal ; et
un premier module de stockage (14) configuré pour stocker localement l'information d'identité ; ou bien,
un module de recueil (15) configuré pour recueillir l'information d'identité enregistrée par un utilisateur ; et
un deuxième module de stockage (16) configuré pour stocker localement l'information d'identité.

12. Système comprenant le dispositif vestimentaire selon la revendication 11 et un dispositif terminal, le dispositif terminal comprenant :
un premier module de réception (21) configuré pour recevoir un message de notification diffusé par un dispositif vestimentaire, où le message de notification est configuré pour instruire le dispositif terminal d'établir une connexion de communication à courte portée avec le dispositif vestimentaire et instruire le dispositif terminal de signaler une notification de connexion à un serveur ;
un module de communication (22) configuré pour établir la connexion de communication à courte portée avec le dispositif vestimentaire ; et
un module d'envoi (23) configuré pour envoyer la notification de connexion au serveur, de telle sorte que le serveur localise le dispositif vestimentaire conformément au dispositif terminal, où la notification de connexion est configurée pour indiquer que le dispositif terminal a établi la connexion de communication à courte portée avec le dispositif vestimentaire.

13. Système selon la revendication 12, comprenant en outre un serveur, le serveur comprenant :
un premier module de réception (31) configuré pour recevoir une information de localisation et une information de détresse signalées par un premier dispositif terminal, où l'information de détresse indique que le premier dispositif terminal est déconnecté d'un dispositif vestimentaire ; et
un module d'envoi (32) configuré pour envoyer une requête de mise en circuit d'une fonction de surveillance à au moins un deuxième dispositif terminal à une portée préréglée du premier dispositif terminal conformément à l'information de localisation, de telle sorte que le au moins un deuxième dispositif terminal met en circuit une fonction de détection de communication à courte portée afin d'établir la connexion de communication à courte portée avec le dispositif vestimentaire.
